# EUROPEAN PATENT APPLICATION

(11) **EP 4 836 345 A1**
(43) Date of publication of application: **04.11.2026**
(21) Application number: 24912535.2
(22) Date of filing: 17.12.2024
(51) Int. Cl.: H04L 7/06, G06F 1/10

(54) **SIGNAL TRANSMISSION SYSTEM AND SIGNAL TRANSMISSION METHOD**

(30) Priority: 28.12.2023 JP 2023223245
(71) Applicant: Quel, Inc., Hachioji-shi, Tokyo 192-0046 (JP)
(72) Inventor: MIYOSHI, Takefumi, Hachioji-shi, Tokyo 192-0046 (JP); MORISAKA, Shinichi, Hachioji-shi, Tokyo 192-0046 (JP)
(74) Representative: Strehl & Partner mbB
(86) International application number: PCT/JP2024/044639
(87) International publication number: WO 2025/142646

(57) **Abstract**

A signal transmission system (200) includes a plurality of control units (220-1, 220-2, ..., 220-n); and a signal distribution device (210) configured to distribute a clock signal (CK) and a long-period signal (LP) to the plurality of control units (220-1, 220-2, ..., 220-n), the long-period signal having a period that is at least twice that of the clock signal (CK) and synchronized with the clock signal (CK). The signal distribution device (210): includes a modulation circuit configured to modulate the long-period signal (LP) with the clock signal (CK) to generate a modulated signal (MD) in which the long-period signal (LP) is superimposed on the clock signal (CK); and is configured to distribute the modulated signal (MD) to the plurality of control units (220-1, 220-2, ..., 220-n) via respective transmission paths (230-1, 230-2, ..., 230-n).

## Description

### Technical Field

The invention relates to a signal transmission system and a signal transmission method.

### Background Art

In a large-scale computer system such as a large-scale quantum computer system, a plurality of control units are required to operate in synchronization with each other with high accuracy based on a low-jitter clock signal. For long-term stable operation of such a large-scale computer system, it is necessary to distribute the low-jitter clock signal and a long-period signal synchronized with the clock signal to the plurality of control units.

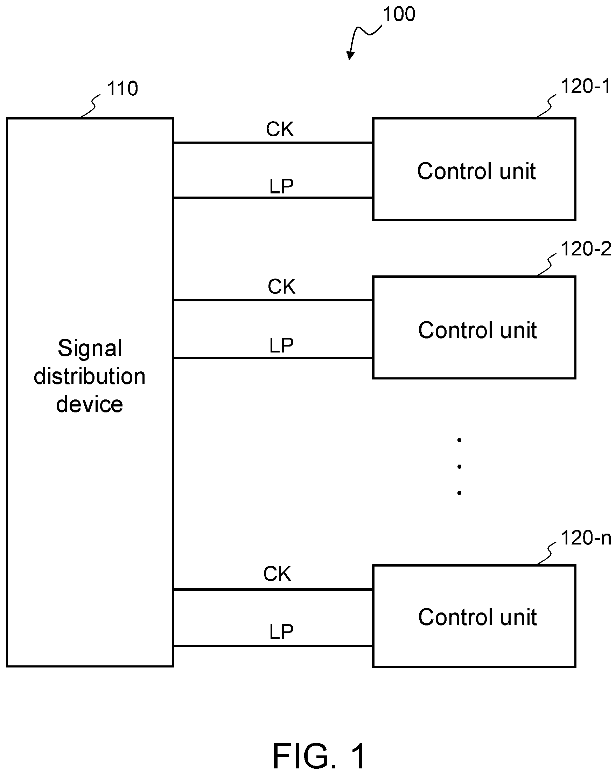

FIG. 1 illustrates a configuration of a signal transmission system 100 in a conventional large-scale computer system. The signal transmission system 100 includes a signal distribution device 110 and a plurality of control units 120-1, 120-2, ..., 120-n (where n is an integer equal to or greater than 2) connected to the signal distribution device 110. The signal distribution device 110 generates a low-jitter clock signal CK and a long-period signal LP, and distributes the clock signal CK and the long-period signal LP separately to the plurality of control units 120-1, 120-2, ..., 120-n via different transmission paths (cables) (for example, see Patent Literature 1).

### Citation List

### Patent Literature

Patent Literature 1: Japanese Patent No. 7303506

### Summary of Invention

### Technical Problem

In the conventional signal transmission system 100, since the clock signal CK and the long-period signal LP are transmitted via separate transmission paths to each control unit, it is necessary, in order to suppress fluctuation between the clock signal CK and the long-period signal LP, to adjust the cable lengths and to control the temperature of a distribution mechanism, which makes implementation difficult. In addition, in order to distribute the long-period signal LP over long distances to a large number of control units, low-loss transmission is required. However, because the period of the long-period signal LP is extremely long, there is a problem in that even if an optical cable suitable for long-distance and low-loss transmission is used, effective transmission cannot be achieved. Furthermore, as the number of cables and the cable length increase when constructing a large-scale computer system, the above problems become even more difficult to solve, and costs increase.

The invention has been made in view of the foregoing, and an object of the invention is to provide a signal transmission system and a signal transmission method capable of easily distributing a clock signal and a long-period signal synchronized with the clock signal at low cost.

### Solution to Problem

A signal transmission system according to the invention includes: a plurality of control units; and a signal distribution device configured to distribute a clock signal and a long-period signal to the plurality of control units, the long-period signal having a period that is at least twice that of the clock signal and synchronized with the clock signal. The signal distribution device: includes a modulation circuit configured to modulate the long-period signal with the clock signal to generate a modulated signal in which the long-period signal is superimposed on the clock signal; and is configured to distribute the modulated signal to the plurality of control units via respective transmission paths.

A signal transmission method according to the invention is a method for distributing a clock signal and a long-period signal to a plurality of control units by a signal distribution device, the long-period signal having a period that is at least twice that of the clock signal and synchronized with the clock signal. The signal transmission method includes: modulating, by a modulation circuit of the signal distribution device, the long-period signal with the clock signal to generate a modulated signal in which the long-period signal is superimposed on the clock signal; and distributing, by the signal distribution device, the modulated signal to the plurality of control units via respective transmission paths.

### Advantageous Effects of Invention

According to the invention, a modulated signal in which a long-period signal is superimposed on a clock signal is generated and transmitted via a transmission path, whereby the clock signal and the long-period signal are distributed to each control unit via the same path. Accordingly, transmission fluctuation is reduced, and the clock signal and the long-period signal can be easily distributed at low cost.

### Brief Description of Drawings

FIG. 1 is a block diagram illustrating a configuration of a conventional signal transmission system.
FIG. 2 is a block diagram illustrating a configuration of a signal transmission system according to embodiments of the invention.
FIG. 3A is a block diagram of a modulation circuit of a signal distribution device.
FIG. 3B is a block diagram illustrating an example of a distribution scheme of a modulated signal in the signal distribution device.
FIG. 3C is a block diagram illustrating another example of the distribution scheme of the modulated signal in the signal distribution device.
FIG. 4A is a timing diagram of a modulation circuit when a phase shift amount δ of a clock signal is in the range of 0° < δ ≤ 90°.
FIG. 4B is a timing diagram of the modulation circuit when 90° < δ < 180°.
FIG. 4C is a timing diagram of the modulation circuit when 180° < δ ≤ 270°.
FIG. 4D is a timing diagram of the modulation circuit when 270° < δ < 360°.
FIG. 5 is a block diagram of a demodulation circuit for each control unit.
FIG. 6 is a timing diagram of a clock signal recovery circuit.
FIG. 7A is an example of a block diagram of a long-period signal recovery circuit.
FIG. 7B is a timing diagram of the long-period signal recovery circuit shown in FIG. 7A.
FIG. 8A is a block diagram of a long-period signal recovery circuit as a modification of FIG. 7A.
FIG. 8B is a timing diagram of the long-period signal recovery circuit shown in FIG. 8A.
FIG. 9A is a block diagram illustrating another example of the long-period signal recovery circuit.
FIG. 9B is a timing diagram of the long-period signal recovery circuit shown in FIG. 9A.

### Description of Embodiments

Embodiments of the invention will be described in detail with reference to the drawings. The embodiments are directed to a signal transmission system and a signal transmission method applied to a large-scale computer system such as a large-scale quantum computer system.

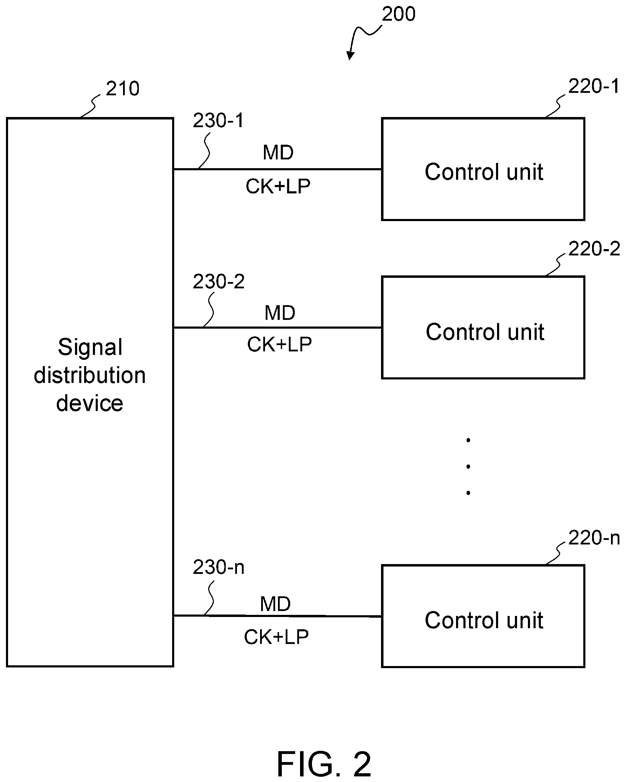

FIG. 2 illustrates a configuration of a signal transmission system 200 according to the embodiments. The signal transmission system 200 includes a signal distribution device 210 and a plurality of control units 220-1, 220-2, ..., 220-n connected to the signal distribution device 210 via transmission paths 230-1, 230-2, ..., 230-n (where n is an integer equal to or greater than 2), respectively.

The signal distribution device 210 is a device for distributing a low-jitter clock signal CK and a long-period signal LP synchronized with the clock signal CK to the plurality of control units 220-1, 220-2, ..., 220-n. The frequency of the clock signal CK ranges from 10 MHz to 100 GHz. The frequency of the long-period signal LP is 1 Hz or more and not greater than one half of the frequency of the clock signal CK (i.e., not less than twice the period of the clock signal CK). In the embodiments, the long-period signal LP is assumed to have the same pulse width as the clock signal CK, but is not limited thereto.

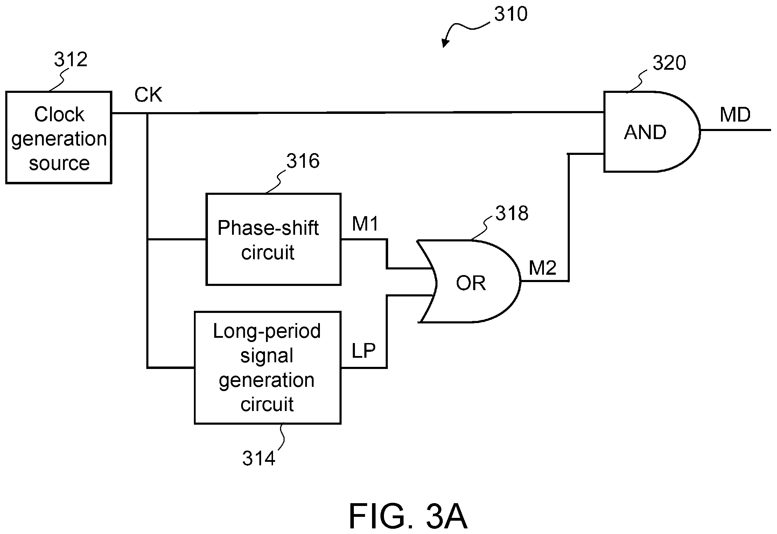

The signal distribution device 210 includes a modulation circuit 310 (FIG. 3A) that modulates the long-period signal LP with the clock signal CK by pulse width modulation (PWM) to generate a modulated signal MD in which the long-period signal LP is superimposed on the clock signal CK. The modulated signal MD is distributed to the control units 220-1, 220-2, ..., 220-n via the transmission paths 230-1, 230-2, ..., 230-n, respectively.

As shown in FIG. 3A, the modulation circuit 310 includes a clock generation source 312, a long-period signal generation circuit 314, a phase-shift circuit 316, an OR gate 318, and an AND gate 320.

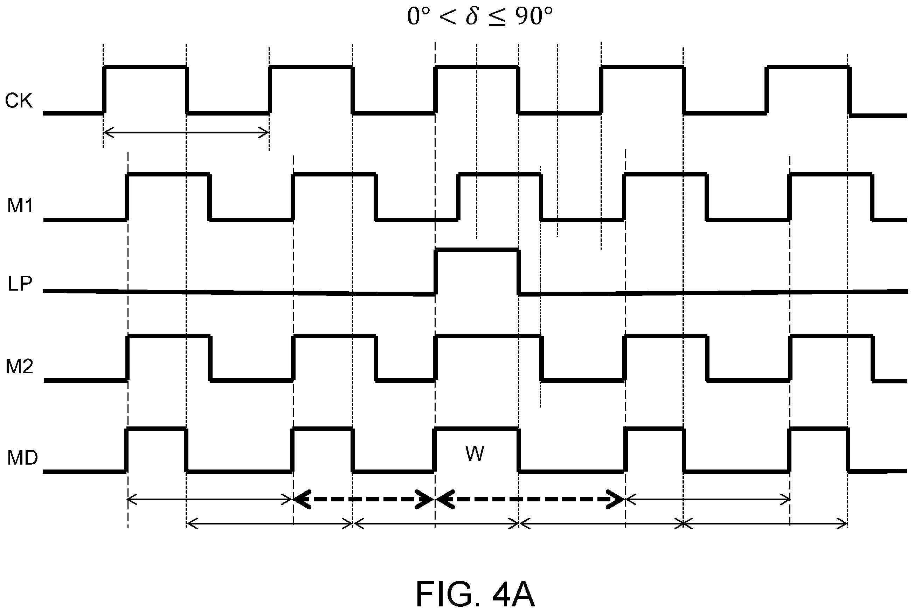

The clock generation source 312 generates the clock signal CK. The clock signal CK from the clock generation source 312 is output to the long-period signal generation circuit 314, the phase-shift circuit 316, and the AND gate 320. The long-period signal generation circuit 314 generates the long-period signal LP from the clock signal CK. The phase-shift circuit 316 shifts a phase of the clock signal CK to obtain a phase-shifted signal M1. The range of a phase shift amount of the clock signal CK will be described later (see FIGS. 4A to 4D).

The OR gate 318 performs an OR operation on the phase-shifted signal M1 and the long-period signal LP to output a composite signal M2 of the phase-shifted signal M1 and the long-period signal LP. The AND gate 320 performs an AND operation on the composite signal M2 and the clock signal CK to output the modulated signal MD.

At least some functions of the modulation circuit 310 can be implemented by a programmable logic device, such as a field programmable gate array (FPGA), or by an application specific integrated circuit (ASIC).

In the embodiments, the modulated signal MD can be distributed using any distribution scheme. For example, the signal distribution device 210 may include n modulation circuits 310 and transmit n modulated signals MD generated by the n modulation circuits 310 to the control units 220-1, 220-2, ..., 220-n via the transmission paths 230-1, 230-2, ..., 230-n, respectively.

When the transmission paths 230-1, 230-2, ..., 230-n are optical cables, a converter configured to convert the modulated signal MD, which is an electrical signal, into an optical signal may be provided at an output stage of each modulation circuit 310. In this case, the n optical signals output from the n converters are transmitted to the control units 220-1, 220-2, ..., 220-n via the transmission paths 230-1, 230-2, ..., 230-n, respectively.

In another distribution scheme, a single modulated signal MD generated by a single modulation circuit 310 may be split into n modulated signals MD by a passive distributor.

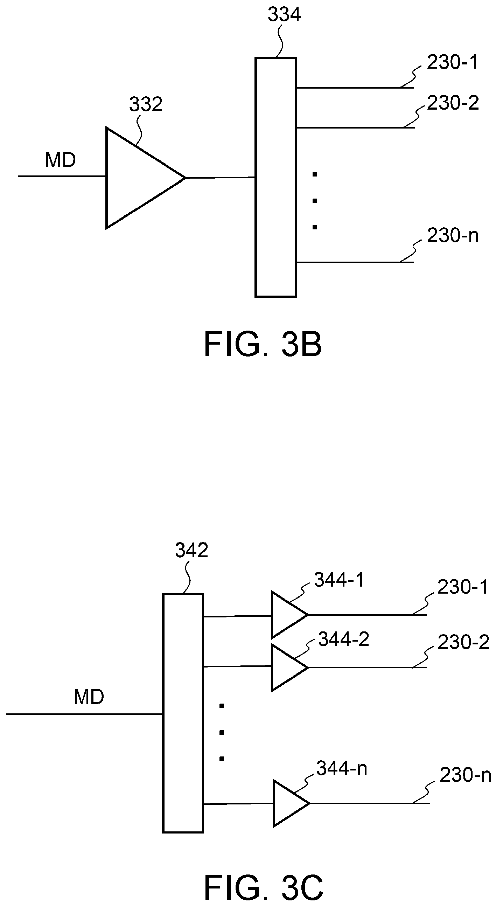

For example, as shown in FIG. 3B, an amplifier 332 amplifies the modulated signal MD generated by the modulation circuit 310 with a gain of n, and a distributor 334 splits the amplified signal into n signals. Although the n signals are attenuated by the splitting in the distributor 334, the n signals have the same signal level as that of the original modulated signal MD because the original modulated signal MD is amplified before attenuation.

Alternatively, as shown in FIG. 3C, a distributor 342 may split the modulated signal MD generated by the modulation circuit 310 into n signals, and n amplifiers 344-1, 344-2, ..., 344-n may amplify the respective n signals with a gain of n. Although the n signals are attenuated by the splitting in the distributor 342, the signal level of the original modulated signal MD is maintained because the n signals are amplified by the n amplifiers 344-1, 344-2, ..., 344-n, respectively.

When the transmission paths 230-1, 230-2, ..., 230-n are electrical cables, a radio-frequency (RF) distributor may be used as the above-described distributor. When the transmission paths 230-1, 230-2, ..., 230-n are optical cables, an optical amplifier and an optical distributor may be used as the above-described amplifier and distributor, respectively. In this case, a converter configured to convert the modulated signal MD, which is an electrical signal, into an optical signal is provided at an output stage of the modulation circuit 310, and the optical signal output from the converter is supplied to the circuit shown in FIG. 3B or FIG. 3C. Other circuit configurations may be adopted as long as an optical signal can be output to an optical cable. For example, the converter may be provided between the amplifier and the distributor.

By using the distributors 334 and 342 as shown in FIGS. 3B and 3C, respectively, the signal distribution device 210 can be configured with a single modulation circuit 310 rather than multiple modulation circuits, thereby enabling the n modulated signals MD to be obtained with a simple configuration. In addition, the amplifier and the distributor are lower in cost and more readily available than an AND gate, and are less susceptible to phase noise degradation. Accordingly, the configurations shown in FIGS. 3B and 3C are superior in cost, availability, and performance to a configuration including n modulation circuits 310 each having the AND gate 320.

If the conventional signal distribution device 110 shown in FIG. 1 includes a distributor configured to split a single clock signal CL into n clock signals CK and another distributor configured to split a single long-period signal LP into n long-period signals LP, skew may occur between these two distributors. On the other hand, in the configurations shown in FIGS. 3B and 3C, since the signal distribution device 210 can be configured with a single distributor, such skew does not occur.

The range of a phase shift amount δ of the clock signal CK in the phase-shift circuit 316 will now be described with reference to timing diagrams shown in FIGS. 4A to 4D.

When 0 < δ ≤ 90° (FIG. 4A), the modulated signal MD is maintained at a constant frequency with respect to falling edges, as is the case with the clock signal CK, but does not have a constant frequency with respect to rising edges (see the dotted double-headed arrows in FIG. 4A).

As shown in FIGS. 4A to 4D, in the modulated signal MD, a pulse W having a relatively long pulse width (hereinafter referred to as a "long-period pulse") appears in each cycle of the long-period signal LP. The pulse width of the long-period pulse W is the same as that of the clock signal CK and the long-period signal LP.

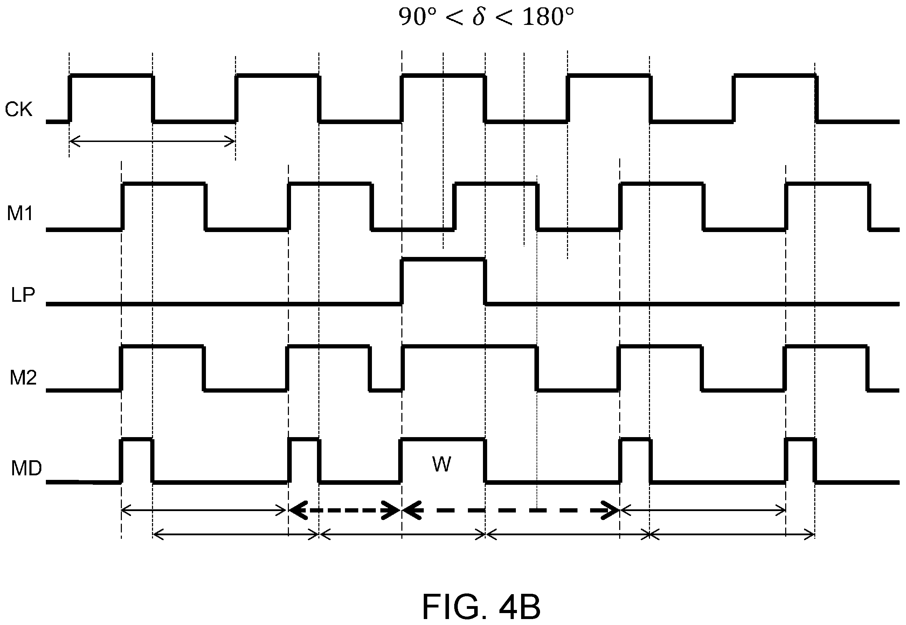

Similarly, when 90° < δ < 180° (FIG. 4B), the modulated signal MD is maintained at a constant frequency with respect to falling edges, as is the case with the clock signal CK, but does not have a constant frequency with respect to rising edges (see the dotted double-headed arrows in FIG. 4B).

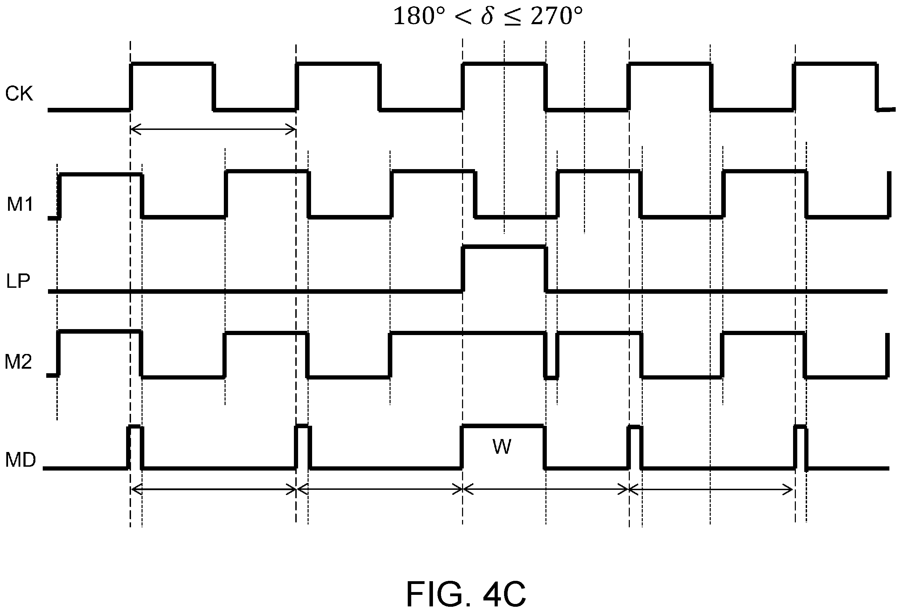

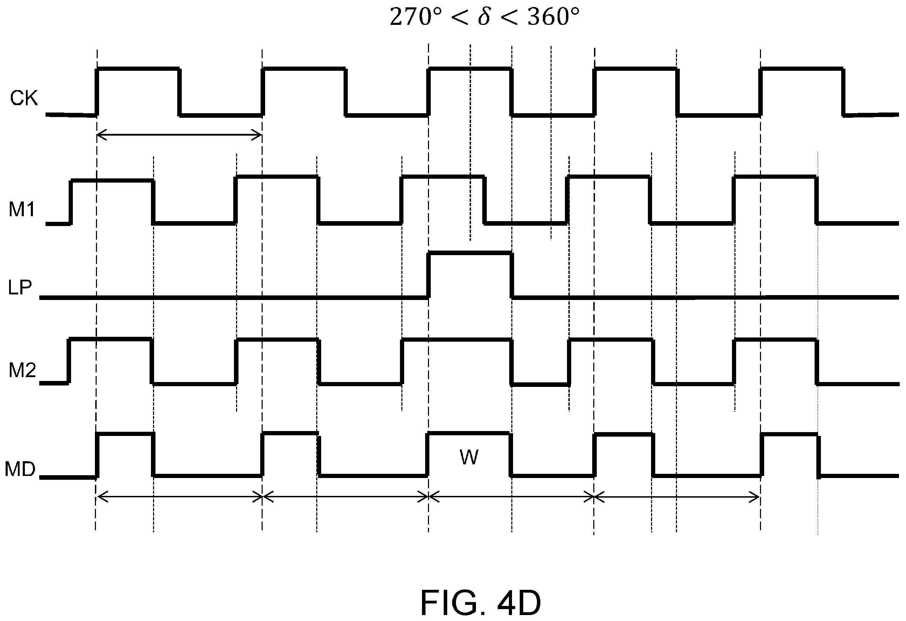

On the other hand, when 180° < δ ≤ 270° (FIG. 4C) and when 270° < δ < 360° (FIG. 4D), the modulated signal MD is maintained at a constant frequency with respect to rising edges with jitter accuracy equivalent to that of the clock signal CK.

Accordingly, by setting 180° < δ < 360° (FIGS. 4C and 4D), the long-period signal LP can be superimposed on the clock signal CK while maintaining the jitter accuracy of the clock signal CK, and the modulated signal MD in which the long-period pulse W appears in each cycle of the long-period signal LP can be generated. The actual range of δ is determined depending on a hold time required by a phase-locked loop (PLL) IC (to be described later) of each control unit on the demodulation side. In consideration of the hold time on the demodulation side, 225° ≤ δ < 270° is preferable.

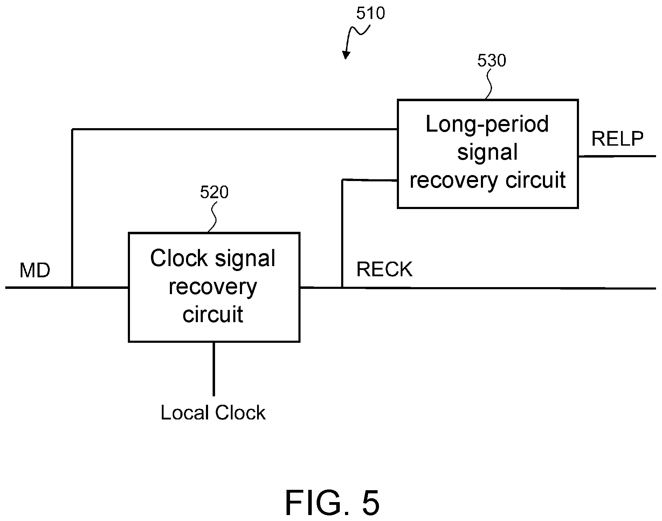

Each of the plurality of control units 220-1, 220-2, ..., 220-n includes a demodulation circuit 510 (FIG. 5) for demodulating the modulated signal MD. As shown in FIG. 5, the demodulation circuit 510 includes a clock signal recovery circuit 520 configured to obtain a recovered clock signal RECK from the modulated signal MD based on a local clock and a long-period signal recovery circuit 530 configured to obtain a recovered long-period signal RELP from the modulated signal MD.

When the transmission paths 230-1, 230-2, ..., 230-n are optical cables, each of the plurality of control units 220-1, 220-2, ..., 220-n includes a converter configured to convert the modulated signal MD, which is an optical signal supplied through an optical cable, into an electrical signal. The modulated signal MD as the electrical signal output from the converter is supplied to the demodulation circuit 510.

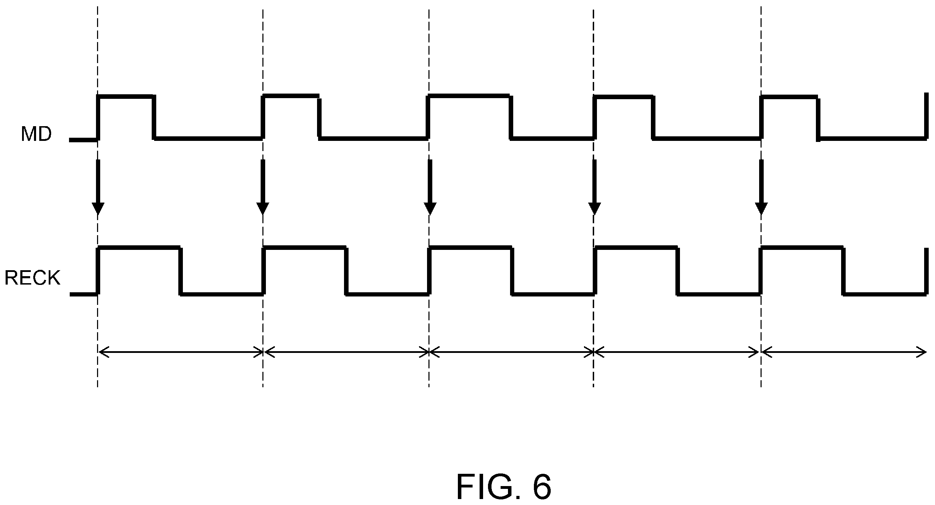

The clock signal recovery circuit 520 includes a PLL. As shown in FIG. 6, rising edges of the modulated signal MD are supplied to the PLL, and the PLL outputs the recovered clock signal RECK having the same period as that of the rising edge of the modulated signal MD and a pulse width equal to half the period. The recovered clock signal RECK is split into two signals, one of which serves as an operating clock of the control unit, and the other is output to the long-period signal recovery circuit 530.

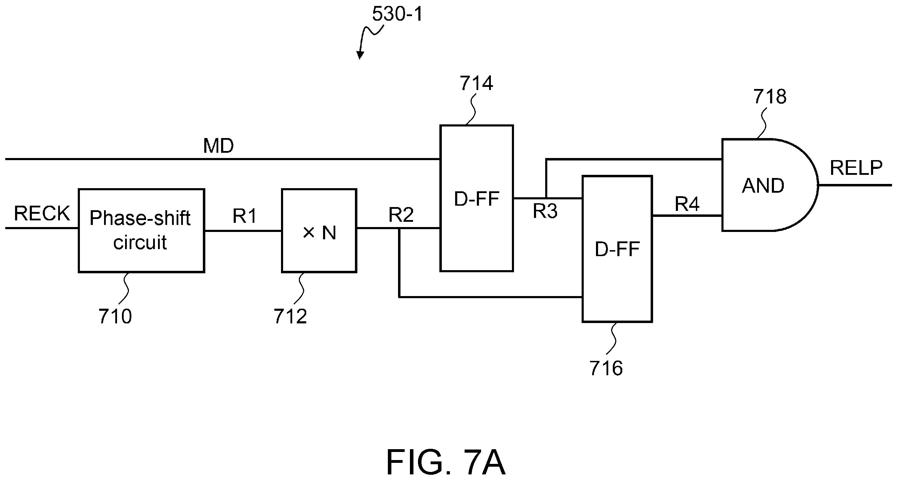

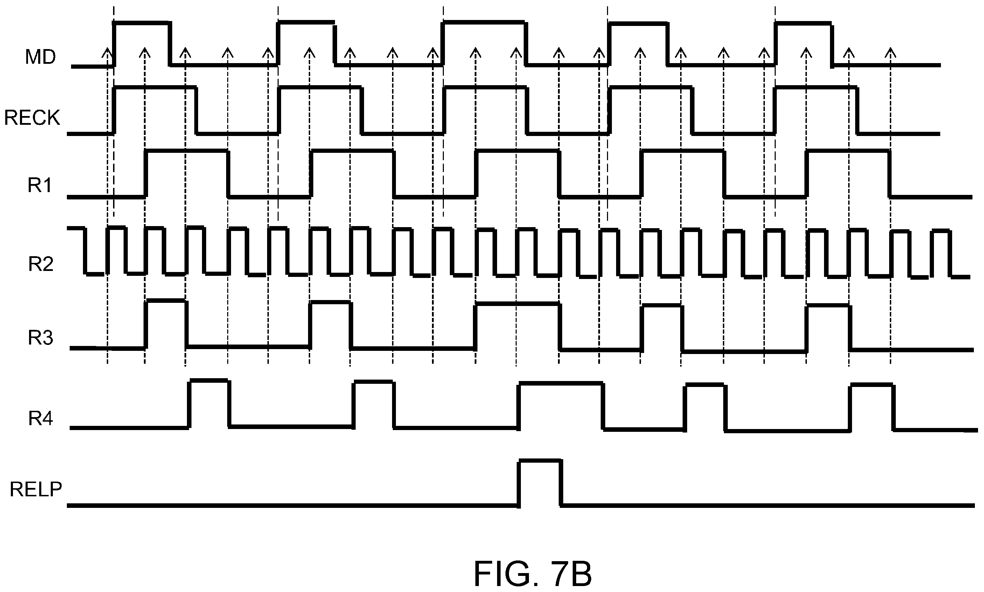

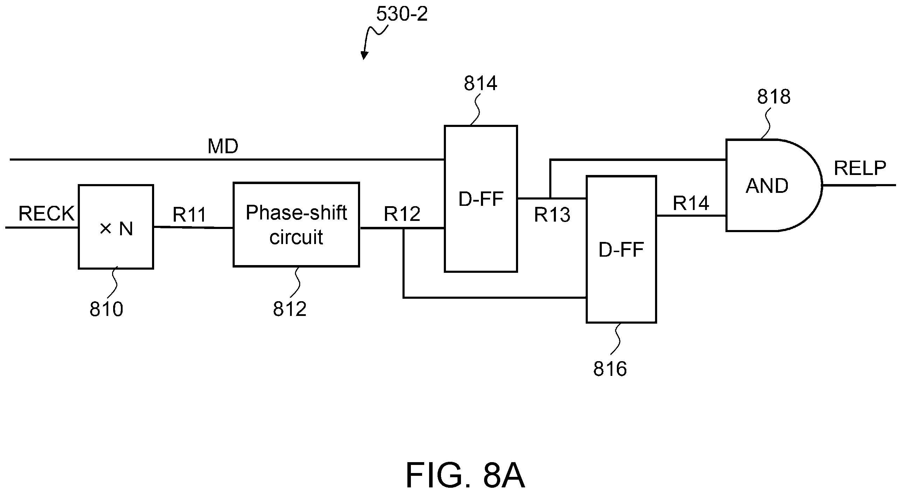

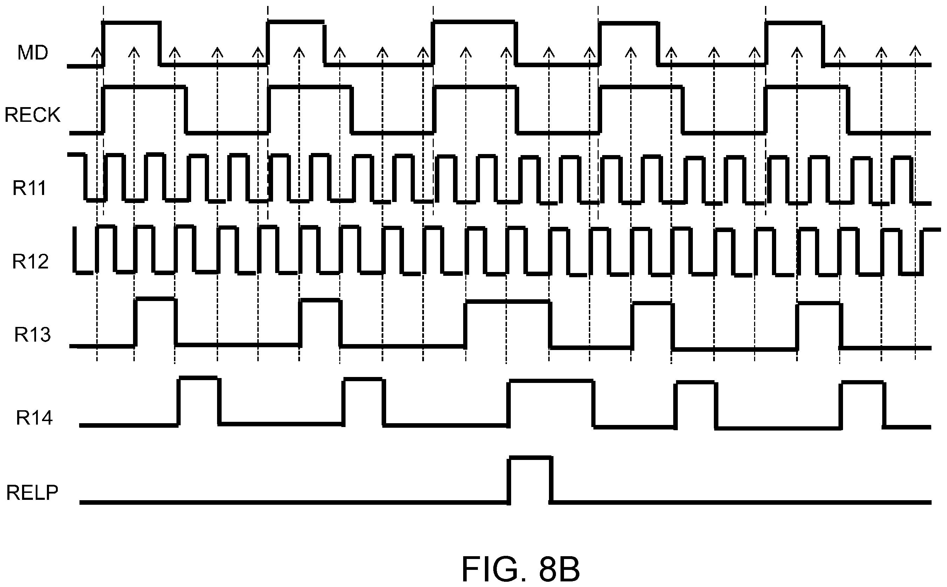

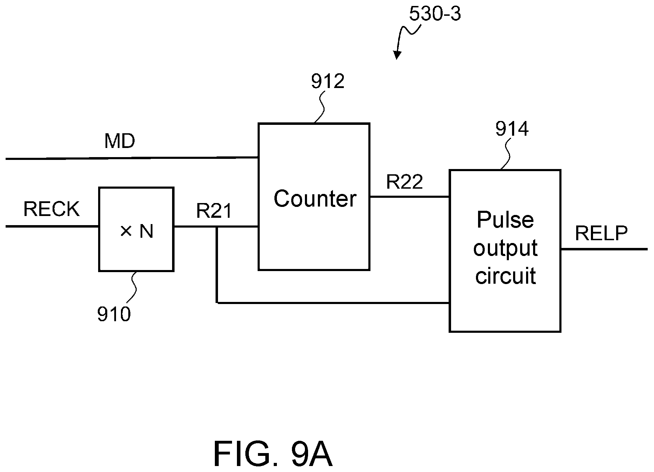

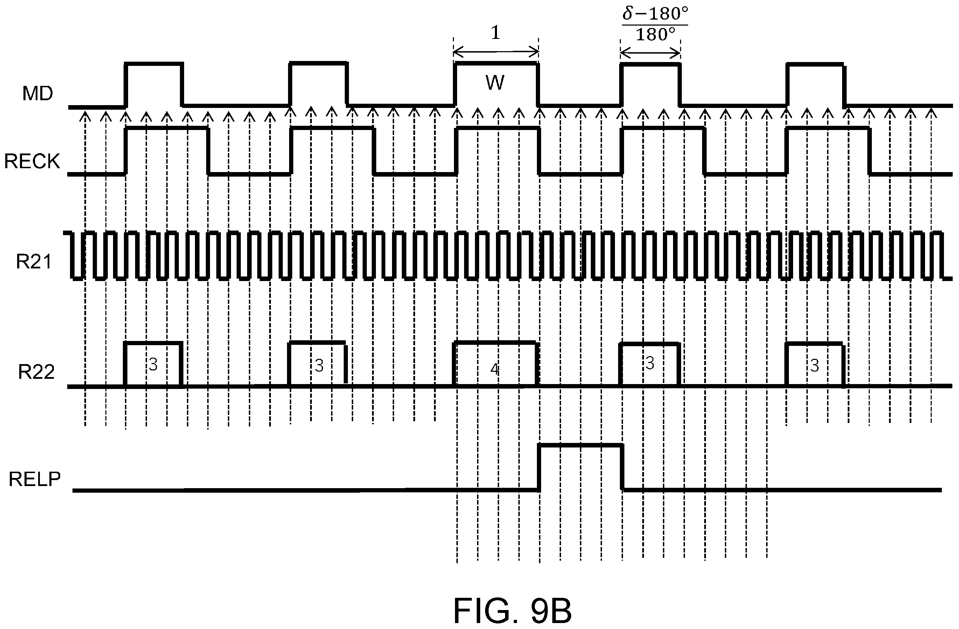

FIG. 7A illustrates a configuration of a long-period signal recovery circuit 530-1 as an example of the long-period signal recovery circuit 530, FIG. 8A illustrates a configuration of a long-period signal recovery circuit 530-2 as a modification of FIG. 7A, and FIG. 9A illustrates a configuration of a long-period signal recovery circuit 530-3 as another example of the long-period signal recovery circuit 530. FIG. 7B illustrates a timing diagram of the long-period signal recovery circuit 530-1 shown in FIG. 7A, FIG. 8B illustrates a timing diagram of the long-period signal recovery circuit 530-2 shown in FIG. 8A, and FIG. 9B illustrates a timing diagram of the long-period signal recovery circuit 530-3 shown in FIG. 9A.

The long-period signal recovery circuit 530-1 shown in FIG. 7A includes a phase-shift circuit 710, a multiplier 712, sampling circuits 714 and 716, and an AND gate 718.

The phase-shift circuit 710 phase-shifts the recovered clock signal RECK by an amount of δ/4 or more and less than 90° to generate a phase-shifted signal R1, where δ is the phase shift amount in the phase-shift circuit 316 of the modulation circuit 310.

The multiplier 712 generates a high-frequency signal R2 having a frequency N times that of the phase-shifted signal R1 (where N is an integer equal to or greater than 2). FIG. 7B illustrates an example in which the frequency of the high-frequency signal R2 is four times that of the phase-shifted signal R1.

The sampling circuit 714, which is a D flip-flop, samples the modulated signal MD at the rising edges of the high-frequency signal R2 to output a first sampling signal R3. The sampling circuit 716, which is also a D flip-flop, samples the first sampling signal R3 at the rising edges of the high-frequency signal R2 to output a second sampling signal R4. As shown in FIG. 7B, the second sampling signal R4 is a signal obtained by shifting the first sampling signal R3 by one period of the high-frequency signal R2.

The AND gate 718 performs an AND operation on the first sampling signal R3 and the second sampling signal R4 to output the recovered long-period signal RELP.

The long-period signal recovery circuit 530-2 shown in FIG. 8A is equivalent to a configuration obtained by reversing the order of the phase-shift circuit 710 and the multiplier 712 in FIG. 7A, and includes a multiplier 810, a phase-shift circuit 812, sampling circuits 814 and 816, and an AND gate 818.

The multiplier 810 generates a first high-frequency signal R11 having a frequency N times that of the recovered clock signal RECK (where N is an integer equal to or greater than 2). FIG. 8B illustrates an example in which the frequency of the first high-frequency signal R11 is four times that of the recovered clock signal RECK.

The phase-shift circuit 812 phase-shifts the first high-frequency signal R11 by an amount of δ or more and less than 360° to generate a second high-frequency signal R12.

The sampling circuit 814, which is a D flip-flop, samples the modulated signal MD at the rising edges of the second high-frequency signal R12 to output a first sampling signal R13. The sampling circuit 816, which is also a D flip-flop, samples the first sampling signal R13 at the rising edges of the second high-frequency signal R12 to output a second sampling signal R14. As shown in FIG. 8B, the second sampling signal R14 is a signal obtained by shifting the first sampling signal R13 by one period of the second high-frequency signal R12.

The AND gate 818 performs an AND operation on the first sampling signal R13 and the second sampling signal R14 to output the recovered long-period signal RELP.

The long-period signal recovery circuit 530-3 shown in FIG. 9A is a circuit configured to output the recovered long-period signal RELP by detecting the long-period pulse W from the modulated signal MD, and includes a multiplier 910, a counter 912, and a pulse output circuit 914.

The multiplier 910 generates a high-frequency signal R21 having a frequency N times that of the recovered clock signal RECK (where N is an even integer of 2 or greater). As shown in FIG. 9B, when the pulse width of the long-period pulse W of the modulated signal MD is defined as 1, the pulse width of pulses other than the long-period pulse W is (δ-180°)/180°. The value of N is set such that the pulse width 1 and the pulse width (δ-180°)/180° can be distinguished from each other (for example, N = 8, N = 16). FIG. 9B illustrates an example in which N = 8.

The counter 912 counts the number of consecutive times the modulated signal MD is at a high level on each rising edge of the high-frequency signal R21 to obtain a count value R22, and outputs the count value R22 to the pulse output circuit 914. In the example shown in FIG. 9B, the count value R22 for the long-period pulse W is 4, and the count value R22 for pulses other than the long-period pulse W is 3.

The pulse output circuit 914 outputs, as a pulse of the recovered long-period signal RELP, a pulse having a pulse width corresponding to a relatively large specified value in synchronization with the high-frequency signal R21 upon the count value R22 reaching the relatively large specified value (that is, upon detecting a slot having a relatively long pulse width). Specifically, the pulse output circuit 914 generates a pulse having a pulse width corresponding to R22 = N/2 upon the count value R22 reaching half of N (R22 = N/2). As a result, the recovered long-period signal RELP is obtained.

At least some functions of the long-period signal recovery circuits 530-1, 530-2, and 530-3 shown in FIGS. 7A, 8A, and 9A, respectively, can be implemented by a programmable logic device, such as an FPGA, or by an ASIC.

According to the signal transmission system 200 of the embodiments, by modulating the long-period signal LP with the low-jitter clock signal CK, the modulated signal MD in which the long-period signal LP is superimposed on the clock signal CK is generated, and the modulated signal MD is distributed to the control units 220-1, 220-2, ..., 220-n via the transmission paths 230-1, 230-2, ..., 230-n, respectively.

As a result, the clock signal CK and the long-period signal LP are transmitted via the same path, so that timing misalignment between the clock signal CK and the long-period signal LP due to differences in wiring length and temperature does not occur in principle. In addition, since the number of transmission paths (cables) can be reduced by half as compared with the conventional signal transmission system 100 shown in FIG. 1, cost reduction can be achieved. Furthermore, since not only electrical cables but also optical cables can be used, the cable length can be increased for long-distance transmission of the long-period signal LP in a large-scale computer system.

The invention is not limited to the above-described embodiments, and various modifications can be made without departing from the scope of the invention. Other embodiments or modifications made by those skilled in the art are also intended to be embraced within the scope of the invention.

### Reference Signs List

200: signal transmission system
210: signal distribution device
220-1, 220-2, 220-n: control unit
230-1, 230-2, 230-n: transmission path
310: modulation circuit
312: clock generation source
314: long-period signal generation circuit
316: phase-shift circuit
318: OR gate
320: AND gate
332, 344-1, 344-2, 344-n: amplifier
334, 342: distributor
510: demodulation circuit
520: clock signal recovery circuit
530, 530-1, 530-2, 530-3: long-period signal recovery circuit
710, 812: phase-shift circuit
712, 810: multiplier
714, 716, 814, 816: sampling circuit
718, 818: AND gate
910: multiplier
912: counter
914: pulse output circuit
CK: clock signal
LP: long-period signal
MD: modulated signal
M1: phase-shifted signal
M2: composite signal
RECK: recovered clock signal
RELP: recovered long-period signal
R1: phase-shifted signal
R2, R21: high-frequency signal
R3, R13: first sampling signal
R4, R14: second sampling signal
R11: first high-frequency signal
R12: second high-frequency signal
R22: count value

## Claims

1. A signal transmission system, comprising:
a plurality of control units; and
a signal distribution device configured to distribute a clock signal and a long-period signal to the plurality of control units, the long-period signal having a period that is at least twice that of the clock signal and synchronized with the clock signal, wherein
the signal distribution device:
comprises a modulation circuit configured to modulate the long-period signal with the clock signal to generate a modulated signal in which the long-period signal is superimposed on the clock signal; and
is configured to distribute the modulated signal to the plurality of control units via respective transmission paths.

2. The signal transmission system according to claim 1, wherein
the signal distribution device is configured to generate the modulated signal by pulse width modulation.

3. The signal transmission system according to claim 1, wherein
the modulation circuit is configured to:
shift a phase of the clock signal to obtain a phase-shifted signal;
perform an OR operation on the phase-shifted signal and the long-period signal to obtain a composite signal of the phase-shifted signal and the long-period signal; and
perform an AND operation on the composite signal and the clock signal to generate the modulated signal.

4. The signal transmission system according to claim 3, wherein
the modulation circuit is configured to shift the phase of the clock signal in a range of more than 180° and less than 360° to obtain the phase-shifted signal.

5. The signal transmission system according to claim 1, wherein
each of the plurality of control units comprises a demodulation circuit configured to obtain a recovered clock signal and a recovered long-period signal from the modulated signal, wherein
the demodulation circuit comprises:
a clock signal recovery circuit configured to obtain the recovered clock signal based on a rising edge of the modulated signal; and
a long-period signal recovery circuit configured to obtain the recovered long-period signal from the modulated signal and the recovered clock signal.

6. The signal transmission system according to claim 5, wherein
the long-period signal recovery circuit is configured to:
generate a high-frequency signal by phase-shifting the recovered clock signal and thereafter multiplying a frequency of the recovered clock signal or by multiplying the frequency of the recovered clock signal and thereafter phase-shifting the recovered clock signal;
sample the modulated signal with the high-frequency signal to obtain a first sampling signal;
sample the first sampling signal with the high-frequency signal to obtain a second sampling signal; and
perform an AND operation on the first sampling signal and the second sampling signal to obtain the recovered long-period signal.

7. The signal transmission system according to claim 5, wherein
the long-period signal recovery circuit is configured to:
multiply a frequency of the recovered clock signal to obtain a high-frequency signal;
count the number of consecutive times the modulated signal is at a high level on each rising edge of the high-frequency signal to obtain a count value; and
output, as a pulse of the recovered long-period signal, a pulse having a pulse width corresponding to a relatively large specified value in synchronization with the high-frequency signal when the count value reaches the relatively large specified value.

8. The signal transmission system according to claim 1, wherein
the signal distribution device further comprises a distributor configured to split the modulated signal generated by the modulation circuit into a plurality of modulated signals, and
the plurality of modulated signals are transmitted to the plurality of control units, respectively.

9. A signal transmission method for distributing a clock signal and a long-period signal to a plurality of control units by a signal distribution device, the long-period signal having a period that is at least twice that of the clock signal and synchronized with the clock signal, the signal transmission method comprising:
modulating, by a modulation circuit of the signal distribution device, the long-period signal with the clock signal to generate a modulated signal in which the long-period signal is superimposed on the clock signal; and
distributing, by the signal distribution device, the modulated signal to the plurality of control units via respective transmission paths.

10. The signal transmission method according to claim 9, wherein
the modulated signal is generated by pulse width modulation.

11. The signal transmission method according to claim 9, wherein
the generating of the modulated signal comprises:
shifting a phase of the clock signal to obtain a phase-shifted signal;
performing an OR operation on the phase-shifted signal and the long-period signal to obtain a composite signal of the phase-shifted signal and the long-period signal; and
performing an AND operation on the composite signal and the clock signal to generate the modulated signal.

12. The signal transmission method according to claim 11, wherein
the phase-shifted signal is obtained by shifting the phase of the clock signal in a range of more than 180° and less than 360°.

13. The signal transmission method according to claim 9, further comprising, by a demodulation circuit of each of the plurality of control units:
obtaining a recovered clock signal based on a rising edge of the modulated signal; and
obtaining a recovered long-period signal from the modulated signal and the recovered clock signal.

14. The signal transmission method according to claim 13, wherein
the obtaining of the recovered long-period signal comprises:
generating a high-frequency signal by phase-shifting the recovered clock signal and thereafter multiplying a frequency of the recovered clock signal or by multiplying the frequency of the recovered clock signal and thereafter phase-shifting the recovered clock signal;
sampling the modulated signal with the high-frequency signal to obtain a first sampling signal;
sampling the first sampling signal with the high-frequency signal to obtain a second sampling signal; and
performing an AND operation on the first sampling signal and the second sampling signal to obtain the recovered long-period signal.

15. The signal transmission method according to claim 13, wherein
the obtaining of the recovered long-period signal comprises:
multiplying a frequency of the recovered clock signal to obtain a high-frequency signal;
counting the number of consecutive times the modulated signal is at a high level on each rising edge of the high-frequency signal to obtain a count value; and
outputting, as a pulse of the recovered long-period signal, a pulse having a pulse width corresponding to a relatively large specified value in synchronization with the high-frequency signal when the count value reaches the relatively large specified value.

16. The signal transmission method according to claim 9, further comprising:
splitting, by a distributor, the modulated signal generated by the modulation circuit into a plurality of modulated signals; and
transmitting the plurality of modulated signals to the plurality of control units, respectively.
